# EUROPÄISCHE PATENTANMELDUNG

(11) **EP 3 296 861 A1**
(43) Veröffentlichungstag der Anmeldung: **21.03.2018**
(21) Anmeldenummer: 17192178.6
(22) Anmeldetag: 20.09.2017
(51) Int. Cl.: G06F 8/60, G06T 19/00

(54) **VERFAHREN ZUM BEREITSTELLEN VON AUGMENTED-REALITY-DATEN**

(30) Priorität: 20.09.2016 DE 102016218023
(71) Anmelder: Scheid, Ralf, 90513 Zirndorf (DE)
(72) Erfinder: Scheid, Ralf, 90513 Zirndorf (DE)
(74) Vertreter: Dr. Gassner & Partner mbB

(57) **Zusammenfassung**

Die Erfindung betrifft ein Verfahren zum Bereitstellen von Augmented-Reality-Daten, die durch einen Benutzer mittels einer Anwendungssoftware für ein Mobilgerät (7) abrufbar sind, mit den folgenden Schritten:
- Aufrufen eines Web-Editors (1),
- Editieren und/oder Modifizieren des Inhalts der Mobilgerät-Anwendungssoftware,
- Hochladen des Inhalts der Mobilgerät-Anwendungssoftware als Augmented-Reality-Daten auf einen Server (5),
- Übertragen des Inhalts der Mobilgerät-Anwendungssoftware von dem Server (5) auf eine digitale Vertriebsplattform (6),
- Bereitstellen der die Augmented-Reality-Daten enthaltenden Mobilgerät-Anwendungssoftware auf der digitalen Vertriebsplattform (6) zum Abrufen durch einen Benutzer.

## Beschreibung

Die Erfindung betrifft ein Verfahren zum Bereitstellen von Augmented-Reality-Daten, die durch einen Benutzer mittels einer Anwendungssoftware für ein Mobilgerät abrufbar sind.

Der Begriff "Augmented Reality (AR)" oder erweiterte Realität bezeichnet die Verknüpfung einer realen Darstellung mit einer virtuellen Darstellung. Mittels erweiterter Realität kann somit eine tatsächlich existierende, vom Benutzer wahrnehmbare Umgebung um virtuelle Elemente ergänzt werden, so dass Informationen dem Benutzer auf verschiedenen Ebenen vermittelt werden können. Es sind bereits Verfahren vorgeschlagen worden, mit denen der Eindruck von erweiterter Realität auf einem Mobilgerät erzeugt werden kann. Dazu wird ein optisch lesbarer Marker mit einem Mobilgerät gescannt. In dem optisch lesbaren Marker enthaltene Daten werden erfasst. Durch eine Client-Software wird eine Verbindung zu einem Datenbank-Server aufgebaut. Durch die Client-Software werden Objektdaten von dem Datenbank-Server anhand der in dem optisch lesbaren Marker enthaltenen Daten abgerufen, wobei die Objektdaten eine Adresse für 3D-Daten umfassen. Anschlie-ßend werden die 3D-Daten von dem Datenbank-Server oder einem Daten-Server abgerufen und ein auf den 3D-Daten beruhendes virtuelles Modell wird auf einer Anzeigefläche des Mobilgeräts dargestellt.

Durch dieses bereits bekannte Verfahren kann an einem beliebigen Ort der Eindruck von erweiterter Realität erzeugt werden. Es reicht dazu aus, dass sich auf dem Mobilgerät des Benutzers die Client-Software befindet. Wenn der Benutzer den optisch lesbaren Marker mit dem Mobilgerät scannt, werden die in dem optisch lesbaren Marker enthaltenen Daten erfasst. Diese Daten werden nach dem Aufbau einer Verbindung zu dem Datenbank-Server gesendet und dienen als Referenz, wodurch der Marker mit bestimmten Objektdaten verknüpft wird. Durch die Client-Software erfolgt anschließend ein Abruf der Objektdaten von dem Datenbank-Server anhand der in dem optisch lesbaren Marker enthaltenen Daten. Die Objektdaten umfassen eine Adresse für 3D-Daten und ggf. weitere Parameter oder Informationen, die für die Darstellung erforderlich sind. Im Anschluss daran erfolgt das Anrufen der 3D-Daten von dem Datenbank-Server oder einem (anderen) Daten-Server. Dieses an sich bekannte Verfahren ermöglicht es, einen Marker z. B. in einer Zeitschriftenanzeige, einem Plakat, einem Prospekt oder in einem Hinweisschild zu "verstecken". Nach dem Scannen des Markers wird ein auf den 3D-Daten beruhendes virtuelles Modell auf der Anzeige des Mobilgeräts dargestellt. Das Mobilgerät kann beispielsweise ein Smartphone, ein Tablet-Computer oder eine Datenbrille sein.

Allerdings besteht bei diesem an sich bekannten Verfahren das Problem, dass bei einer Änderung des Inhalts jeweils eine neue Anwendungssoftware (App) erstellt werden muss, die anschließend z. B. in Form eines Updates auf eine digitale Vertriebsplattform ("App"-Store) geladen werden muss. Der Anwender muss dann die geänderte Anwendungssoftware vollständig oder in Form eines Updates herunterladen, was jedoch aus Sicht des Anwenders mit einem gewissen Aufwand verbunden ist und als unkomfortabel empfunden wird.

Der Erfindung liegt daher die Aufgabe zu Grunde, ein Verfahren zum Bereitstellen von Augmented-Reality-Daten anzugeben, bei dem die Augmented-Reality-Daten leichter bereitgestellt und/oder geändert werden können.

Zur Lösung dieser Aufgabe ist ein Verfahren mit den Merkmalen des Patentanspruchs 1 vorgesehen. Zweckmäßige Ausgestaltungen des erfindungsgemäßen Verfahrens sind in den Unteransprüchen angegeben.

Das erfindungsgemäße Verfahren umfasst die folgenden Schritte:
- Aufrufen eines Web-Editors,
- Editieren und/oder Modifizieren des Inhalts der Mobilgerät-Anwendungssoftware,
- Hochladen des Inhalts der Mobilgerät-Anwendungssoftware als Augmented-Reality-Daten auf einen Server,
- Übertragen des Inhalts der Mobilgerät-Anwendungssoftware von dem Server auf eine digitale Vertriebsplattform, und
- Bereitstellen der die Augmented-Reality-Daten enthaltenden Mobilgerät-Anwendungssoftware auf der digitalen Vertriebsplattform zum Abrufen durch einen Benutzer.

Die Erfindung beruht auf der Erkenntnis, dass eine einfache Anpassung und Modifikation des Inhalts einer Mobilgerät-Anwendungssoftware durch einen Entwickler möglich ist, indem Änderungen mittels eines Web-Editors vorgenommen und geänderte Inhalte auf einen Server hochgeladen werden. Von diesem Server können die geänderten Inhalte direkt auf eine digitale Vertriebsplattform übertragen werden. Dadurch ergibt sich der Vorteil, dass einem Benutzer jeweils aktuelle Augmented-Reality-Daten zur Verfügung gestellt werden, ohne dass der Benutzer eine neue Anwendungssoftware für sein Mobilgerät herunterladen muss oder ein Update einer bereits vorhandenen Anwendungssoftware vornehmen muss. Für einen Entwickler oder Anbieter der Augmented-Reality-Daten ergibt sich der Vorteil, dass diese Daten jederzeit geändert und aktualisiert werden können. Beispielsweise kann ein Anbieter in regelmäßigen Abständen die Augmented-Reality-Daten anpassen, etwa um auf Sonderangebote und besondere Aktionen hinzuweisen. Das erfindungsgemäße Verfahren ist auch für den Benutzer besonders bequem, da er lediglich eine einzige Anwendungssoftware benötigt, die sich auf seinem Mobilgerät befindet.

Bei dem erfindungsgemäßen Verfahren wird es bevorzugt, dass ein dreidimensionales Objekt als Inhalt der Mobilgerät-Anwendungssoftware bereitgestellt wird. Der Benutzer hat die Möglichkeit, dieses dreidimensionale Objekt aus unterschiedlichen Perspektiven zu betrachten, es zu skalieren, d.h. zu vergrößern oder zu verkleinern oder bestimmte Aktionen auszulösen. Selbstverständlich kann die Mobilgerät-Anwendungssoftware auch mehrere derartige dreidimensionale Objekte umfassen.

Eine bevorzugte Variante des erfindungsgemäßen Verfahrens sieht vor, das das dreidimensionale Objekt in mehreren Varianten bereitgestellt wird, wobei jede Variante für ein Mobilgerät-Betriebssystem vorgesehen ist. Auf diese Weise kann der Entwickler zwei oder mehr Varianten erzeugen, die jeweils einem Mobilgerät-Betriebssystem zugeordnet sind.

Vorzugsweise wird bei dem erfindungsgemäßen Verfahren ein Marker als Komponente des Inhalts der Mobilgerät-Anwendungssoftware bereitgestellt. Der Marker dient als Verknüpfung einer gedruckten Information und der Mobilgerät-Anwendungssoftware. Wenn ein Benutzer die Mobilgerät-Anwendungssoftware auf seinem Mobilgerät startet und den Marker erfasst, werden über eine drahtlose Kommunikationsverbindung die Augmented-Reality-Daten von einem Server abgerufen und auf dem Mobilgerät des Benutzers dargestellt.

Vorzugsweise wird bei dem erfindungsgemäßen Verfahren ein Skript mit Steuerkommandos für eine animierte Darstellung des dreidimensionalen Objekts als Komponente des Inhalts der Mobilgerät-Anwendungssoftware bereitgestellt. Der Entwickler kann auf diese Weise eine oder mehrere animierte Darstellungen festlegen, die beim Aufrufen der Anwendungssoftware durch einen Benutzer auf dessen Mobilgerät dargestellt werden. Die animierte Darstellung kann auch interaktiv gestaltet sein, derart, dass nach einer Aktion des Benutzers eine bestimmte Animation abgespielt wird. Beispielsweise kann der Benutzer eine Schaltfläche betätigen. Daraufhin wird eine neue oder geänderte Animation abgespielt und dargestellt.

Bei dem erfindungsgemäßen Verfahren wird es besonders bevorzugt, dass wenigstens eines der folgenden Steuerkommandos in dem Skript verwendet wird:
- Bewegen des dreidimensionalen Objekts,
- Drehen des dreidimensionalen Objekts,
- Abspielen der animierten Darstellung des dreidimensionalen Objekts,
- Festlegen der Dauer oder der Frequenz der animierten Darstellung.

Der Entwickler kann somit auf einfache Weise das Erscheinungsbild der animierten Darstellung anpassen.

Darüber hinaus wird es bei dem erfindungsgemäßen Verfahren bevorzugt, dass dem dreidimensionalen Objekt beim Editieren mittels des Web-Editors wenigstens eines der folgenden Attribute zugeordnet wird:
- eine Audiodatei,
- eine Videodatei,
- eine Textur,
- eine Beleuchtungseinstellung.

Diese Attribute ermöglichen es, dem Benutzer weitere Informationen im Zusammenhang mit dem dreidimensionalen Objekt zu vermitteln. Es ist selbstverständlich auch möglich, einem dreidimensionalen Objekt mehrere derartige Attribute zuzuordnen, beispielsweise mehrere Audiodateien oder Videodateien, die nacheinander dargestellt bzw. abgespielt werden.

Eine besonders bevorzugte Variante des erfindungsgemäßen Verfahrens sieht vor, dass beim Starten der Mobilgerät-Anwendungssoftware auf dem Mobilgerät durch einen Benutzer jeweils aktuelle Augmented-Reality-Daten von der digitalen Vertriebsplattform abgerufen werden.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: einen Web-Editor, mit dem Inhalte der Mobilgerät-Anwendungssoftware editiert und/oder modifiziert werden können,
- Fig. 2: den Datenfluss bei der Durchführung des erfindungsgemäßen Verfahrens,
- Fig. 3: ein Mobilgerät, auf dem Augmented-Reality-Daten dargestellt werden, und
- Fig. 4: das in Fig. 3 gezeigte Mobilgerät mit Schaltflächen zum Auslösen von Aktionen durch einen Benutzer.

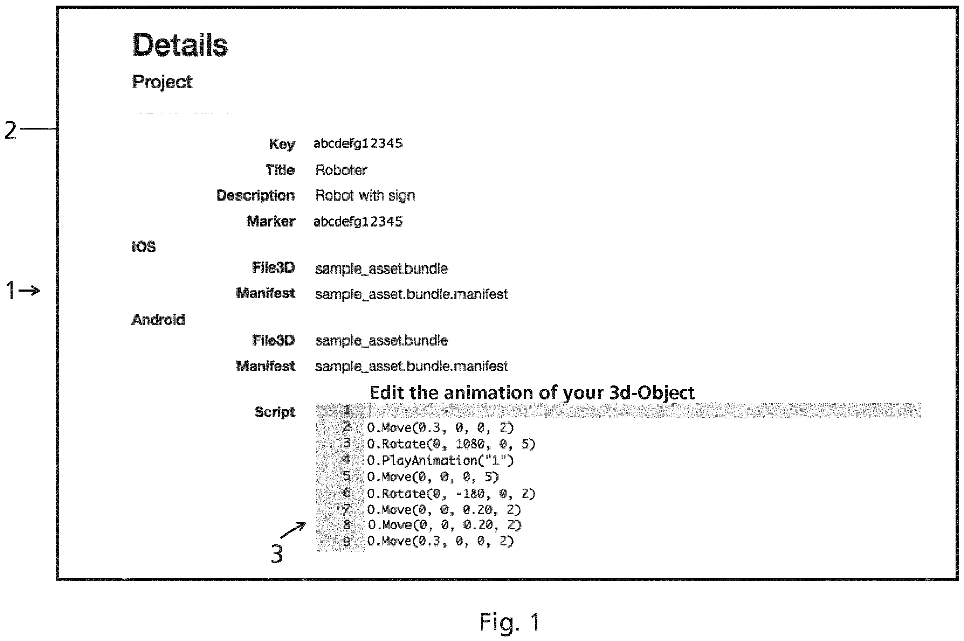

Fig. 1 zeigt einen Web-Editor 1, der auf einem Bildschirm 2 dargestellt wird. Der Web-Editor 1 kann beispielsweise durch einen Entwickler aufgerufen werden, um den Inhalt einer Mobilgerät-Anwendungssoftware zu editieren und/oder zu modifizieren. Der Inhalt der Mobilgerät-Anwendungssoftware, der sogenannte "AR Content" kann beeinflusst und geändert werden. Der Inhalt wird in einer Skript-Sprache eingegeben. Bestandteile des in Fig. 1 gezeigten Skripts 3 sind beispielsweise ein Identifikationsmerkmal (Key), ein Titel, eine Beschreibung und die Angabe eines Markers. Der Marker kann Bestandteil eines gedruckten Dokuments sein, beispielsweise einer Anzeige in einer Zeitschrift, eines Prospekts oder Flyers. In den nächsten Zeilen wird der Inhalt der Mobilgerät-Anwendungssoftware für zwei verschiedene Betriebssysteme, in diesem Fall iOS und Android definiert. Durch eine Eingabe des Entwicklers werden die Inhalte auf einen Server übertragen, wobei für jedes Betriebssystem ein separater Server vorgesehen ist.

In den nächsten Zeilen wird durch das Skript 3 eine Animation des dreidimensionalen Objekts definiert. In dem Skript 3 sind Steuerkommandos enthalten, die eine Bewegung des dreidimensionalen Objekts definieren. Die Steuerkommandos ermöglichen es, das dreidimensionale Objekt zu bewegen und zu rotieren. Zusätzlich kann eine bestimmte Animation abgespielt werden. Nach dem Editieren des in Fig. 1 gezeigten Skripts 3 wird der Inhalt der Mobilgerät-Anwendungssoftware auf den bereits erwähnten Server übertragen.

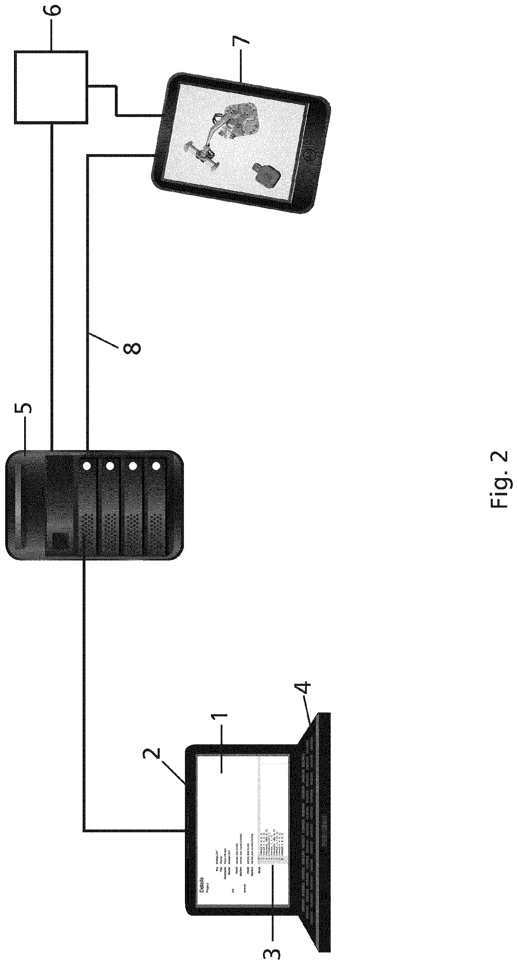

Fig. 2 zeigt schematisch diesen Ablauf. Auf einem Computer 4 wird der Web-Editor 1 aufgerufen. Nach dem Editieren werden die Augmented-Reality-Daten, die den Inhalt der Mobilgerät-Anwendungssoftware bilden, zu dem Server 5 übertragen. Auf dem Server 5 sind die von verschiedenen Entwicklern eingegebenen Inhalte für Mobilgerät-Anwendungssoftware, d. h. für "Apps", gespeichert.

Von dem Server 5 kann der Inhalt der Mobilgerät-Anwendungssoftware zu einer digitalen Vertriebsplattform 6 übertragen werden. Derartige digitale Vertriebsplattformen sind z. B. unter den Bezeichnungen "Play Store" oder "App Store" bekannt. Ein Benutzer kann eine bestimmte Mobilgerät-Anwendungssoftware ("App") von der digitalen Vertriebsplattform 6 auf ein Mobilgerät 7 herunterladen. Nach dem Herunterladen und Installieren der Mobilgerät-Anwendungssoftware kann der Benutzer diese Software jederzeit aufrufen.

Beim Starten der auf dem Mobilgerät 7 installierten Mobilgerät-Anwendungssoftware werden von dem Mobilgerät 7 jeweils aktuelle Augmented-Reality-Daten abgerufen. Diese Daten können entweder von der digitalen Vertriebsplattform 6 oder alternativ von dem Server 5 abgerufen werden. Der Ort, von dem die aktuellen Daten abgerufen werden können, ist in der Mobilgerät-Anwendungssoftware definiert. In dem in Fig. 2 gezeigten Ausführungsbeispiel erfolgt der Abruf der aktuellen Augmented-Reality-Daten von dem Mobilgerät 7 über eine schematisch dargestellte Datenverbindung 8 von dem Server 5. Auf diese Weise können jeweils aktuelle Augmented-Reality-Daten auf dem Mobilgerät 7 dargestellt werden. Ein Anbieter kann beispielsweise täglich wechselnde Angebote zur Verfügung stellen. Es ist nicht erforderlich, dass der Benutzer dazu eine Mobilgerät-Anwendungssoftware oder ein Update einer vorhandenen Mobilgerät-Anwendungssoftware herunterlädt. Beim Aufrufen der Mobilgerät-Anwendungssoftware lädt diese über die Datenverbindung 8 aktuelle Augmented-Reality-Daten von dem Server 5 herunter, die ein Entwickler mittels des Web-Editors 1 eingepflegt hat.

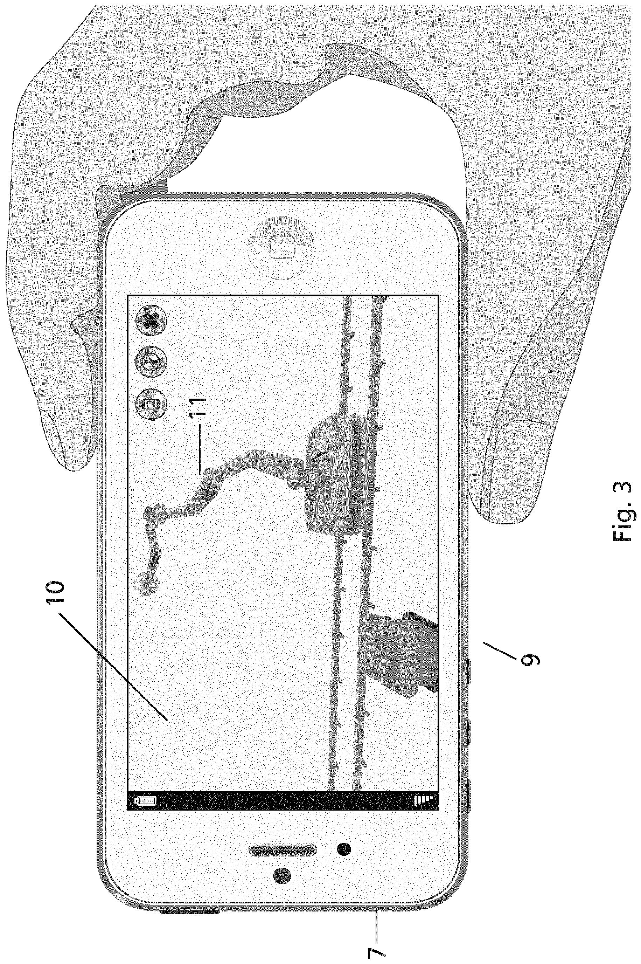

Fig. 3 zeigt einen Benutzer beim Aufrufen der Mobilgerät-Anwendungssoftware mit einem Mobilgerät. Der Benutzer hält sein Mobilgerät 7 so vor eine Zeitschrift 9, dass diese von einer Kamera des Mobilgeräts 7 erfasst wird. Die Zeitschrift 9 umfasst eine Bilddarstellung, in der ein Marker enthalten ist. Der Marker ist in der Bilddarstellung versteckt und für das menschliche Auge nicht erkennbar. Die Mobilgerät-Anwendungssoftware wertet das Kamerabild aus, erkennt den Marker und lädt von dem Server 5 die aktuellen Augmented-Reality-Daten auf das Mobilgerät 7 herunter. Auf der Anzeigefläche 10 des Mobilgeräts 7 wird eine überlagerte Darstellung aus der bildlichen Darstellung der Zeitschrift 9 und einem dreidimensionalen Objekt 11, bei dem es sich in diesem Fall um einen Roboter handelt, dargestellt.

Durch Verändern des Abstands zwischen dem Mobilgerät 7 und der Zeitschrift 9 kann der Benutzer die Darstellung des dreidimensionalen Objekts 11 auf dem Bildschirm 10 skalieren, d. h. hinsichtlich seiner Größe verändern. Durch Drehen und Bewegen des Mobilgeräts 7 kann der Benutzer das dreidimensionale Objekt 11 von unterschiedlichen Seiten betrachten.

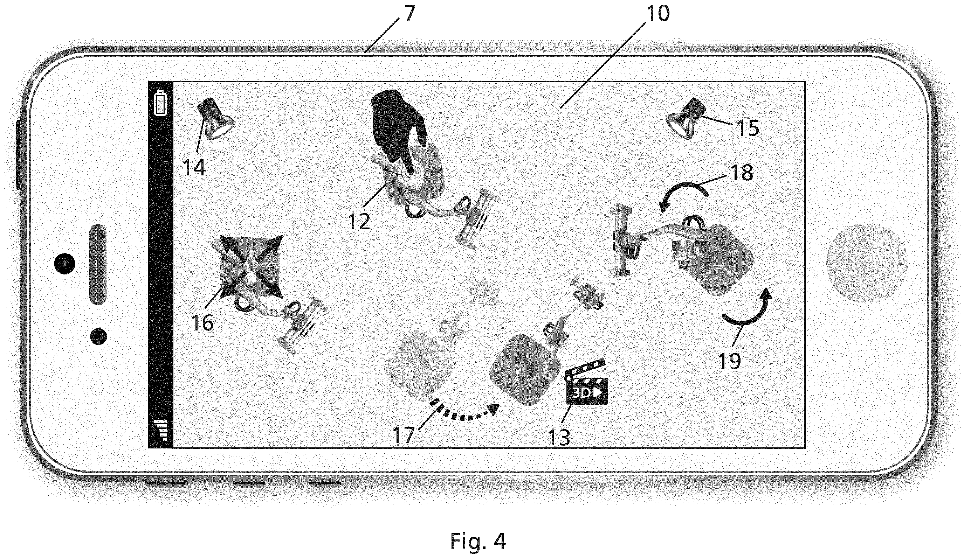

Fig. 4 zeigt schematisch verschiedene Aktionen, die ein Benutzer durch Berühren des Bildschirms 10 des Mobilgeräts 7 auslösen kann. Der Benutzer hat die Möglichkeit, eine bestimmte Schaltfläche 12 auf dem Bildschirm 10 anzutippen, um eine Aktion auszuführen. Die jeweilige Aktion wird von dem Entwickler im Rahmen der Programmierung des Skripts 3 mittels des Web-Editors 1 festgelegt. Durch Antippen einer Schaltfläche 13 kann eine Animation, d. h. eine Videodatei, abgespielt werden. Durch Antippen der als Lampen ausgebildeten Schaltflächen 14, 15 kann die Beleuchtung eines dreidimensionalen Objekts ein- oder ausgeschaltet oder manipuliert werden.

Vier Pfeile 16 zeigen schematisch, dass durch eine Wischbewegung mit zwei Fingern eine Skalierung, d. h. eine Vergrößerung oder eine Verkleinerung, des dargestellten dreidimensionalen Objekts vorgenommen werden kann. Ein Pfeil 17 zeigt schematisch an, dass die Position des dreidimensionalen Objekts auf der Anzeigefläche verschoben werden kann.

Die beiden Pfeile 18, 19 zeigen an, dass durch eine mit zwei Fingern vorgenommene Drehbewegung eine Drehung des dreidimensionalen Objekts ausgelöst werden kann.

### Bezugszeichenliste

- 1: Web-Editor
- 2: Bildschirm
- 3: Skript
- 4: Computer
- 5: Server
- 6: digitale Vertriebsplattform
- 7: Mobilgerät
- 8: Datenverbindung
- 9: Zeitschrift
- 10: Bildschirm
- 11: 3D-Objekt
- 12: Schaltfläche
- 13: Schaltfläche
- 14, 15: Schaltfläche
- 16: Pfeil
- 17: Pfeil
- 18, 19: Pfeil

## Patentansprüche

1. Verfahren zum Bereitstellen von Augmented-Reality-Daten, die durch einen Benutzer mittels einer Anwendungssoftware für ein Mobilgerät (7) abrufbar sind, mit den folgenden Schritten:
- Aufrufen eines Web-Editors (1),
- Editieren und/oder Modifizieren des Inhalts der Mobilgerät-Anwendungssoftware,
- Hochladen des Inhalts der Mobilgerät-Anwendungssoftware als Augmented-Reality-Daten auf einen Server (5),
- Übertragen des Inhalts der Mobilgerät-Anwendungssoftware von dem Server (5) auf eine digitale Vertriebsplattform (6),
- Bereitstellen der die Augmented-Reality-Daten enthaltenden Mobilgerät-Anwendungssoftware auf der digitalen Vertriebsplattform (6) zum Abrufen durch einen Benutzer.

2. Verfahren nach Anspruch 1, **dadurch gekennzeichnet, dass** ein dreidimensionales Objekt (11) als Inhalt der Mobilgerät-Anwendungssoftware bereitgestellt wird.

3. Verfahren nach Anspruch 2, **dadurch gekennzeichnet, dass** das dreidimensionale Objekt (11) in mehreren Varianten bereitgestellt wird, wobei jede Variante für ein Mobilgerät-Betriebssystem vorgesehen ist.

4. Verfahren nach Anspruch 1 oder 2, **dadurch gekennzeichnet, dass** ein Marker als Komponente des Inhalts der Mobilgerät-Anwendungssoftware bereitgestellt wird.

5. Verfahren nach einem der Ansprüche 2 bis 4, **dadurch gekennzeichnet, dass** ein Skript (3) mit Steuerkommandos für eine animierte Darstellung des dreidimensionalen Objekts (11) als Komponente des Inhalts der Mobilgerät-Anwendungssoftware bereitgestellt wird.

6. Verfahren nach Anspruch 5, **dadurch gekennzeichnet, dass** wenigstens eines der folgenden Steuerkommandos in dem Skript (3) verwendet wird:
- Bewegen des dreidimensionalen Objekts (11),
- Drehen des dreidimensionalen Objekts (11),
- Abspielen der animierten Darstellung des dreidimensionalen Objekts (11),
- Festlegen der Dauer oder Frequenz der animierten Darstellung.

7. Verfahren nach einem der Ansprüche 2 bis 6, **dadurch gekennzeichnet, dass** dem dreidimensionalen Objekt (11) beim Editieren mittels des Web-Editors (1) wenigstens eines der folgenden Attribute zugeordnet wird:
- eine Audiodatei,
- eine Videodatei,
- eine Textur,
- eine Beleuchtungseinstellung.

8. Verfahren nach einem der vorangehenden Ansprüche, **dadurch gekennzeichnet, dass** beim Starten der Mobilgerät-Anwendungssoftware auf dem Mobilgerät (7) durch einen Benutzer jeweils aktuelle Augmented-Reality-Daten von der digitalen Vertriebsplattform (6) abgerufen werden.
